# EUROPEAN PATENT APPLICATION

(11) **EP 4 261 127 A1**
(43) Date of publication of application: **18.10.2023**
(21) Application number: 22169885.5
(22) Date of filing: 26.04.2022
(51) Int. Cl.: B64C 39/02, G05D 1/02, H04B 7/15, H04W 24/04, B25J 5/00

(54) **SYSTEM TO REMEDY MEDICAL DEVICE WITHOUT WIRELESS CONNNECTIVITY**

(30) Priority: 12.04.2022 US 202263329928 P
(71) Applicant: Koninklijke Philips N.V., 5656 AG Eindhoven (NL)
(72) Inventor: ERHARD, Klaus, Alfred, Eindhoven (NL); SOSSIN, Artur, Eindhoven (NL); NAIK, Sarif, Kumar, Eindhoven (NL); RAVI, Veena, Eindhoven (NL)
(74) Representative: Philips Intellectual Property & Standards

(57) **Abstract**

A system (300) for assessing and/or providing wireless communication between a medical device (12, 12') and a hospital wireless network (52) includes an electronic processor; and a memory storing instructions readable and executable by the electronic processor to: determine whether a radio (44) of the medical device has wireless connectivity; and perform a remedial action in response to the determination being that the radio of the medical device does not have wireless connectivity.

## Description

### FIELD OF THE INVENTION

The following relates generally to the medical device tracking arts, medical equipment handling arts, real-time location system (RTLS) arts, Wi-Fi connectivity analysis arts, and related arts.

### BACKGROUND

Wireless connections between medical devices such as image acquisition sensors (e.g., digital X-ray detector plates or local MRI coils) and a host machine (e.g., digital X-ray system or MRI scanner) are sometimes used. These enable a more flexible positioning of the data acquisition sensor during an examination. Moreover, the sensors can easily be connected to multiple host systems at various locations at a clinical site. Similarly, mobile medical imaging equipment such as mobile C-arm or mobile digital X-ray systems, can be used throughout various locations within a single hospital. However, in remote spots with poor or no access to the hospital network, hence limiting the connectivity and data transfer, such wireless connectivity can be a detriment rather than a benefit. Mobile medical devices such as, mobile C-arm systems are operated in a variety of locations, which makes it difficult or impossible to send the acquired image data and/or log information directly to the local IT systems. While this can be alleviated to an extent by including an on-board data storage buffer in the medical device, this solution can be less than satisfactory. Such a storage buffer has a limited capacity, which then limits the amount of time the medical device can be out-of-range of the Wi-Fi network before medical data is lost. Additionally, the storage buffer could lose the stored data due to events such as temporary power loss, again resulting in lost medical data. Such a loss due to a buffer malfunction is again more problematic as the time out-of-range increases, as more data would be lost in such a malfunction. In some cases, these considerations may lead a medical equipment manufacturer to elect to not include wireless connectivity in devices for which reliable communication connectivity is important, such as in medical devices that may be transmitting life-critical medical data.

Medical equipment can also easily be damaged when not handled carefully. Typically, careful handling according to the manufacturer's specifications prevents operator misuse and hence damage of the medical equipment, while mishandling can result in expensive repair or replacement costs. Conflicts on warranty due to operator misuse can lead to customer dissatisfaction or lead to high service costs at less careful or less properly trained sites.

Expensive medical equipment can lead to high service and maintenance cost when the operating staff is not properly trained or misuses the devices. Examples include, carrying mobile or attachable devices such as mobile X-ray detectors, magnetic resonance (MR) coils, or computed tomography (CT) phantoms, without the required precautions, i.e., use both hands on the device, do not run, etc. Other examples of mishandling may include failure to use designated straps or other support components when transporting heavy medical equipment, or allowing Wi-Fi-enabled devices to be moved out of range of the hospital Wi-Fi access points (APs).

To generalize, while mobile and/or cord-free medical equipment has a wide range of advantages, the beneficial portability of such equipment also makes it prone to damage during transport, or to malfunction due to loss of wireless connectivity when transported to a location with inadequate Wi-Fi service coverage.

The following discloses certain improvements to overcome these problems and others.

### SUMMARY OF THE INVENTION

In one aspect, a system for assessing and/or providing wireless communication between a medical device and a hospital wireless network is disclosed. The system includes an electronic processor and a memory storing instructions readable and executable by the electronic processor to determine whether a radio of the medical device has wireless connectivity; and perform a remedial action in response to the determination being that the radio of the medical device does not have wireless connectivity.

In another aspect, a system for assessing and/or providing wireless communication between a medical device and a hospital wireless network is disclosed. The system includes an autonomous robot with an electronic processor and a memory storing instructions readable and executable by the electronic processor to: determine whether a radio of the medical device has wireless connectivity; and perform a remedial action in response to the determination being that the radio of the medical device does not have wireless connectivity, wherein the remedial action includes autonomously moving the robot toward the medical device and establishing a wireless connection with the radio of the medical device via the at least one radio of the autonomous robot, acquire medical and/or operational data generated by the medical device via the established wireless connection, and transferring the acquired medical and/or operational data to the hospital wireless network via the at least one radio of the autonomous robot.
In another aspect, a medical apparatus includes a medical device, one or more sensors (14) configured to monitor transport of the medical device, and at least one electronic processor (16, 18) programmed to: detect a time-stamped transport event based on sensor data acquired by the one or more sensors; and perform a remedial action in response to the detected time-stamped transport event.

In another aspect, a medical communication system is disclosed for providing wireless communication between a medical device and a hospital Wi-Fi network. The system includes a radio system comprising a Wi-Fi radio and a non-Wi-Fi radio, and an electronic processor and memory storing instructions readable and executable by the electronic processor to: establish a wireless connection with a non-Wi-Fi radio **(44)** of the medical device via the non-Wi-Fi radio; acquire medical and/or operational data generated by the medical device via the established wireless connection; and transfer the acquired medical and/or operational data to the hospital Wi-Fi network **(52)** via the Wi-Fi radio. In some embodiments, the medical communication system comprises an autonomous vehicle.

One advantage resides in reducing likelihood of damage to portable medical equipment during transport.

Another advantage resides in providing practical real-time operator training on the handling of sensitive portable medical equipment.

Another advantage resides in reducing repair costs over time for a medical facility for repairing medical equipment.

Another advantage resides in identifying patterns of misuse of medical equipment to for example enable targeted remedial training on equipment handling.

Another advantage resides in collecting location data of medical equipment and connecting the equipment electronically via a network.

Another advantage resides in improving a Wi-Fi connection between medical devices to maximize operability of the devices.

A given embodiment may provide none, one, two, more, or all of the foregoing advantages, and/or may provide other advantages as will become apparent to one of ordinary skill in the art upon reading and understanding the present disclosure.

### BRIEF DESCRIPTION OF THE DRAWINGS

The disclosure may take form in various components and arrangements of components, and in various steps and arrangements of steps. The drawings are only for purposes of illustrating the preferred embodiments and are not to be construed as limiting the disclosure.
Fig. 1 diagrammatically illustrates an illustrative apparatus for monitoring medical device in accordance with the present disclosure.
Fig. 2 shows exemplary flow chart operations of the system of Fig. 1.
Figs. 3-5 show other embodiments of the apparatus of Fig. 1.

### DETAILED DESCRIPTION OF EMBODIMENT

The following relates to monitoring of the handling of medical equipment. Certain types of medical imaging equipment, such as X-ray detector plates, local MR coils, and CT imaging phantoms, are transported or handled by imaging technicians or other medical professionals. Many of these types of equipment are heavy and prone to damage if dropped, strike a wall, or otherwise undergo abrupt impact. The equipment may include lifting handles or support straps to reduce likelihood of such impacts. However, these features may not be used, and/or the medical professional may be careless in handling equipment, for example running with the equipment. Impact damage to the medical imaging equipment can lead to unnecessary warranty claims and customer dissatisfaction.

In some embodiments, sensors are added to portable medical equipment and/or to straps or handles used for transporting same, with the sensors designed to detect mishandling of the equipment. Such sensors can include: accelerometers or other motion sensors to detect movement of equipment and/or impacts thereto; pressure sensors on the handles to detect whether the handles are used during transport; proximity sensors attached to the equipment and transport strap respectively, to verify they are in close proximity to each other during transport; connection sensors that detect whether a transport strap is physically connected with the equipment, vital sign sensors (e.g., heart rate, temperature, or blood pressure) to detect the physical condition of the person transporting the equipment, and so forth. The sensors are designed to generate timestamped data.

Furthermore, an electronic processor receives data from the sensors and possibly also other log information such as machine logs to detect when the equipment is transported or used. Optionally, the timestamped sensor data may be correlated with locations of personnel provided by a hospital Real Time location System (RTLS) to associate mishandling events with specific individuals. Based on the sensor (and optionally log and RTLS) data, the processor determines (1) impact events; and (2) mishandling events.

The impact and mishandling event detections (or, more generally, detected transport events) may be variously used, for example to determine whether repair should be covered under warranty or is due to misuse of the equipment, or to trigger a service call to ensure the equipment is fully functional.

The detectable mishandling events include impact events as well as other types of mishandling such as not using the handles or carrying strap, running with the equipment, or so forth. A detected single egregious mishandling event may trigger an immediate warning. For example, if the accelerometer detects the equipment is moving but the handle sensors do not detect the handles are being used, then a warning to carry the equipment by the handles may be issued (for example, by lighting or flashing LED indicators on the handles, or a loudspeaker integrated with the device issuing an electronic voice warning in English or another locally used natural language). A pattern of (possibly less egregious) mishandling events may trigger a recommendation to a hospital administrator that remedial training should be provided to the staff. If RTLS data are available to identify mishandling events with a specific individual, the recommendation for retraining may target that specific individual.

In a variant (and not necessarily exclusive) embodiment, egregious mishandling events tied in time to damage to the equipment may be a basis for refusing warranty coverage for repairing the damage (consonant with relevant contractual warranty terms).

Other types of transport problems with portable medical equipment may relate to transport of Wi-Fi-equipped portable medical equipment to a location with inadequate Wi-Fi coverage. While this generally does not result in damage to the equipment, it can result in malfunction or loss of medical data which can have adverse consequences for the provided medical care. The following also addresses these types of transport problems by disclosing remediation of situations in which a portable medical device is out of Wi-Fi range. Loss of Wi-Fi connectivity can occur due to moving the device to a location not covered by the Wi-Fi network due to gaps in the Wi-Fi access point (AP) layout, or because the medical device is taken outside of the hospital grounds, for example taken outside of the hospital building. In other use cases, the portable medical device may be deployed at a disaster location or other temporary location supported by a portable Wi-Fi hot spot with limited coverage.

In some embodiments, mobile robots with built-in Wi-Fi APs and autonomous navigation can be programmed to follow the portable medical device. The robot includes data storage and can thus receive wireless data from the medical device. At time intervals the robot may then move to a location with central Wi-Fi access to transmit the stored data to the hospital network. In some embodiments, a fleet of such mobile robots are provided along with a central controller that intelligently deploys robots when a mobile medical device falls off the network (or, in a preventative mode, has a weak Wi-Fi signal). The mobile robots may be wheeled vehicles or, in an outdoor setting, may be unmanned aerial vehicles (UAVs).

In other embodiments, the mobile robots are omitted, and instead the mobile medical device is itself programmed to detect weak or lost Wi-Fi connectivity and to provide remedial instructions such as: "Wi-Fi connection weak - please move this device to a different location to perform the procedure! "

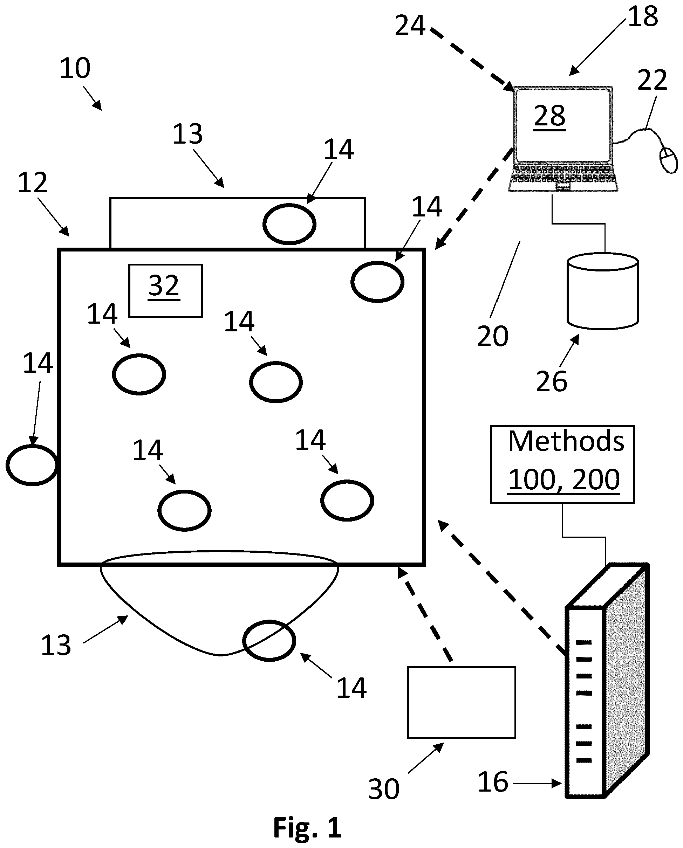

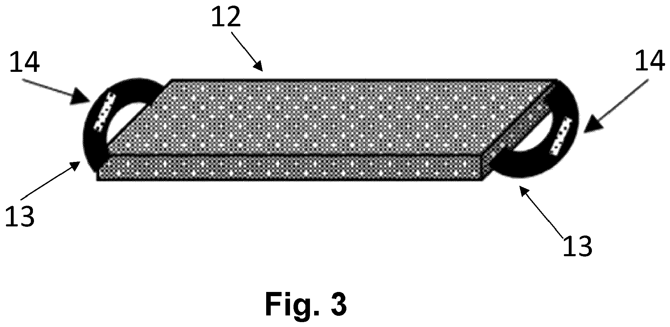

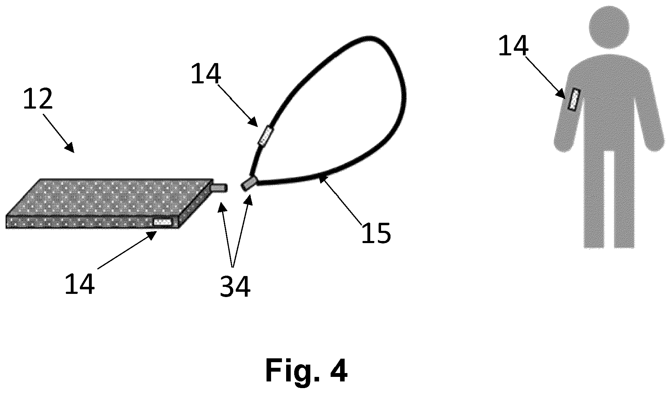

With reference to Fig. 1, a medical apparatus **10** for monitoring of the handling of medical equipment and analyzing Wi-Fi connectivity of medical equipment is shown. The apparatus **10** includes a portable medical device **12** (diagrammatically shown in Fig. 1 as a box; also see nonlimiting illustrative examples of Figs. 3 and 4 described later herein). The portable medical device **12** can comprise any suitable portable medical device, such as an IV pump, a patient bed, an X-ray detector plate, a local MR coil, a CT imaging phantom, or so forth. Fig. 1 also shows one or more sensors **14** (diagrammatically shown in Fig. 1 as circles) configured to monitor transport of the portable medical device **12.** Examples of the sensor(s) **14** are described in more detail below, but in some brief nonlimiting examples may include inertial measurement units (IMUs) for detecting transport events such as impacts or excessive transport speed, sensors for detecting transport events such as (non)-use of transport hardware such as handles or lifting straps, or so forth. In some embodiments, the one or more sensors **14** can include or operate in conjunction with a real-time locating system (RTLS) configured to perform tracking of the portable medical device **12.**

The apparatus **10** further includes an electronic processing device **16, 18** such as a server computer **16,** a workstation or smart tablet 18, various combinations thereof, or more generally a computer. The server computer **16** may comprise a plurality of server computers, e.g. interconnected to form a server cluster, cloud computing resource, or so forth, to perform more complex computational tasks. The workstation **18** and/or server computer **16** includes typical components, such as an electronic processor **20** (e.g., a microprocessor), at least one user input device (e.g., a mouse, a keyboard, a trackball, a device with an embedded screen such as a tablet, a smartphone, a smartwatch, an alternate reality/virtual reality headset or goggles, and/or the like) **22,** and a display device **24** (e.g. an LCD display, plasma display, cathode ray tube display, and/or so forth). In some embodiments, the display device **24** can be a separate component from the workstation **18,** or may include two or more display devices.

The electronic processor **20** is operatively connected with one or more non-transitory storage media **26.** The non-transitory storage media **26** may, by way of non-limiting illustrative example, include one or more of a magnetic disk, RAID, or other magnetic storage medium; a solid state drive, flash drive, electronically erasable read-only memory (EEROM) or other electronic memory; an optical disk or other optical storage; various combinations thereof; or so forth; and may be for example a network storage, an internal hard drive of the workstation **18,** various combinations thereof, or so forth. It is to be understood that any reference to a non-transitory medium or media **26** herein is to be broadly construed as encompassing a single medium or multiple media of the same or different types. Likewise, the electronic processor **20** may be embodied as a single electronic processor or as two or more electronic processors. The non-transitory storage media **26** stores instructions executable by the at least one electronic processor **20.** The instructions include instructions to generate a visualization of a graphical user interface (GUI) **28** for display on the display device **24.**

The non-transitory computer readable medium **26** (or the server computer **16)** stores instructions which are readable and executable by the at least one electronic processor **20** (or the server computer **16)** to (i) detect a time-stamped transport event based on sensor data acquired by the one or more sensors **14,** and (ii) perform a remedial action in response to the detected time-stamped transport event. The remedial event could range from recording the transport event to an active remediation such as issuing a warning in response to detected mishandling of the portable medical device **12.**

In one example embodiment, the sensor(s) **14** include an inertial measurement unit (IMU) disposed on or in the portable medical device **12.** The IMU sensor **14** can comprise an accelerometer, a gyroscope, a magnetometer, and so forth. The server computer **16** is then programmed to detect the time-stamped transport event comprising a time-stamped impact event in which the portable medical device **12** undergoes an impact, and the remedial action performed in response to the detected time-stamped impact event includes at least recording the time-stamped impact event.

In another example embodiment, the sensors **14** include a location sensor disposed on or in the portable medical device **12,** and a handle usage sensor disposed on or in a transportation handle **13** (diagrammatically shown in Fig. 1 as a rectangle) of the portable medical device **12** and configured to detect usage of the transportation handle **13.** The location sensor **14** can be an IMU sensor, a radiofrequency identification (RFID) tag, an infrared tag, and so forth used with the RTLS to track a location of the portable medical device **12.** The handle sensor **14** can comprise a pressure sensor, a capacitive touch sensor, a strain gauge, and optical sensor, and so forth. The server computer **16** is then programmed to detect the time-stamped transport event comprising a time-stamped handle non-usage event in which the handle usage sensor **14** is not detecting usage of the transportation handle **13** concurrently with the location sensor **14** detecting transportation of the portable measurement device **12.** In another example embodiment, the sensors **14** include a proximity sensor including a first sensor component disposed on or in the portable medical device **12,** and a second sensor component disposed on a device support component **15** (e.g., a support strap diagrammatically shown as a curvy line in Fig. 1) configured to detachably connect with and support the portable medical device **12.** The first and second sensor components are configured to detect whether the first and second sensor components are in mutual proximity to each other. The server computer **16** is then programmed to detect the time-stamped transport event comprising a time-stamped support device non-usage event in which the proximity sensor **14** is not detecting mutual proximity of the first and second sensor components concurrently with the location sensor **14** detecting transportation of the portable measurement device **12.**

In another example embodiment, the sensors **14** include a connection sensor configured to detect whether a detachable device support component (e.g., the support strap **15)** is connected with the portable medical device **12.** A location sensor **14** is disposed on or in the portable medical device **12.** The server computer **16** is then programmed to detect the time-stamped transport event comprising a time-stamped support device non-usage event in which the connection sensor **14** is not detecting the detachable device support component **15** is connected with the portable medical device **12** concurrently with the location sensor **14** detecting transportation of the portable medical device **12.**

In another example embodiment, the sensor **14** includes a location sensor disposed on or in the portable medical device **12.** The server computer **16** is then programmed to detect the time-stamped transport event comprising a time-stamped transport speeding event in which the location sensor **14** is detecting transportation of the portable measurement device **12** at a speed greater than a speed limit (that is, a maximum acceptable speed of transport of the device **12,** as predefined in a device operating manual, hospital regulations, or other authoritative source).

In another example embodiment, the sensors **14** include a vital sign sensor configured to measure a vital sign of a person, a device location sensor disposed on or in the portable medical device **12,** and a person location sensor configured to be worn by the person. The server computer **16** is then programmed to detect the time-stamped transport event comprising a time-stamped physiological stress event in which the device and person location sensors **14** are detecting the person and the portable medical device **12** moving together and the vital sign sensor **14** is detecting the person is under physiological stress. This could, for example, detect a situation in which a single person is attempting to move a heavy portable medical device **12** when the heavy device **12** should only be moved by a team of two persons.

In another example embodiment, the sensor **14** includes an audible and/or visual alarm (e.g., a sound, a visual message, a blinking light, and so forth) disposed on the portable medical device **12.** The server computer **16** is then programmed to perform the remedial action comprising activating the audible and/or visual alarm **14.** In some embodiments, the sound could be a prerecorded or electronically generated natural language voice warning in English or another natural language. Such a voice warning is expected to be a particularly effective remedial action as it effectively provides a disembodied voice admonishing the mishandling in real time.

In another example embodiment, the server computer **16** is programmed to perform the remedial action comprising recording the time-stamped transport event annotated with a spatial location at which the time-stamped transport event occurred. The spatial location is determined from the RTLS comprising the sensor(s) **14** in communication with the server computer **16.** (This remedial action can be readily combined with the remedial action of a real-time warning as previously described).

In another example embodiment, the portable medical device **12** is Wi-Fi enabled, and the sensor(s) **14** includes a sensor configured to detect the time-stamped transport event comprising a time-stamped loss of the Wi-Fi connectivity of the portable medical device **12.** The server computer **16** is then programmed to perform the remedial action performed in response to the detected time-stamped loss of Wi-Fi connectivity comprising buffering Wi-Fi communication off the portable medical device **12** in a data storage **32** of the portable medical device **12.**

In another example embodiment, the portable medical device **12** is Wi-Fi enabled, and the sensor(s) **14** includes a Wi-Fi-enabled mobile robot configured to connect via Wi-Fi with the portable medical device **12.** The server computer **16** is then programmed to detect the time-stamped transport event comprising a time-stamped loss of the Wi-Fi connectivity between the portable medical device **12** and the Wi-Fi-enabled mobile robot **14** and to perform the remedial action comprising moving the Wi-Fi-enabled mobile robot **14** closer to the portable medical device **12.**

These are merely illustrative examples, and should not be construed as limiting.

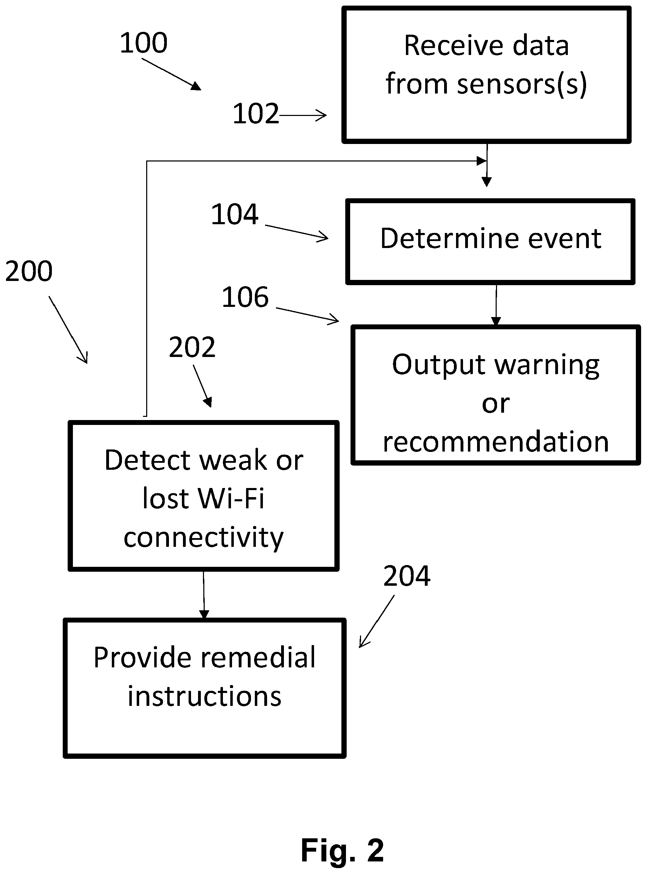

With reference to Fig. 2, and with continuing reference to Fig. 1, the electronic processing device **18,** or the server computer **16** (or a combination of the two) is configured as described above to perform a method or process **100** for monitoring user handling of medical equipment. The non-transitory storage medium **26** (or the server computer **16)** stores instructions which are readable and executable by the at least one electronic processor **18** (or the server computer **16)** to perform disclosed operations including performing the method or process **100.** In some examples, the method **100** may be performed at least in part by cloud processing.

At an operation **102,** data is received from one or more sensors **14** secured to one or more medical devices (e.g., the portable medical device **12).** In some embodiments, the data comprises timestamped data. In other embodiments, the data comprises log data from the portable medical device **12.** In further embodiments, the data comprises location data from the portable medical device **12.**

At an operation **104,** at least one of (i) an impact event of one of the medical devices **12** and (ii) a mishandling event of one of the medical devices **12** is determined. In one example embodiment, the received timestamped data can be correlated with location data provided by the RTLS comprising the sensor(s) **14.** The impact event and/or the mishandling event can be determined based on the correlating. In another example embodiment, the impact event and/or the mishandling event can be determined based on log data from the medical devices **12.**

At an operation **106,** a warning and/or a recommendation can be output on the electronic processing device **18.** In one example, a recommendation can be to an administrator for a user interacting with the medical device **12** as determined by the location data for which the plurality of mishandling events were determined. The recommendation can comprise performing a training session for the medical device **12** for which the plurality of mishandling event(s) were determined. In another example, a warning to a user of the medical device **12** for which the mishandling event was determined. In another example, a service call can be triggered for the medical device **12** for which at least one of an impact event or a mishandling event was determined. These are merely illustrative examples, and should not be construed as limiting.

With continuing reference to Figs. 1 and 2, the electronic processing device **18,** or the server computer **16** (or a combination of the two) is configured as described above to perform a method or process **200** for detecting Wi-Fi connectivity of a medical device (e.g., the portable medical device **12).** The non-transitory storage medium **26** (or the server computer **16)** stores instructions which are readable and executable by the at least one electronic processor **18** (or the server computer **16)** to perform disclosed operations including performing the method or process **200.** In some examples, the method **200** may be performed at least in part by cloud processing.

As shown in Fig. 2, the method **200** can be performed in conjunction with the method **100.** For example, the remedial action in the operation **104** can comprise restoring a weak or lost Wi-Fi connectivity of the medical device **12.** At an operation **202,** a weak or lost Wi-Fi connectivity with a central Wi-Fi access point (AP) **30** is detected. At an operation **204,** remedial instructions to restore the weak or lost Wi-Fi connectivity can be provided (e.g., "Wi-Fi connection weak - please move this device to a different location to perform the procedure! ").

### EXAMPLES

The following examples describes the apparatus **10** in more detail. In a first embodiment, a monitoring device comprising one of the sensors **14** is worn by a medical device operator and collects motion data using accelerometer sensors **14.** This information can be analysed by an algorithm to identify any sudden changes in the acceleration for fall and collision detection. In another embodiment, the information from the monitoring device is compared to the log information from the medical device **12** itself. Often, expensive medical equipment such as mobile X-ray detectors or MR coils have integrated impact sensors **14** to identify a heavy shock of the medical device **12.** In this situation, the timestamps of the identified collision detection from the user's monitoring device can be aligned with the corresponding signals from the impact sensor of the medical device **12.** Then, the data from the user's monitoring device at around the time of the event can be processed to identify any misuse of the medical device **12,** like running while carrying the medical device **12** or carrying it with only one hand on handles **13** (see next example).

In another embodiment, as shown in Fig. 3, a medical device **12** such as an X-ray detector plate has monitoring devices **14** that are integrated into handles **13** of the medical device **12** itself and measures with contact sensors **14,** that the operator has both hands on the handles **13** attached to the medical device **12.** The monitoring device **14** may share part of its log information (e.g., the status if both contact sensor **14** measure a signal, indicating the user carries the medical device **12** with both hands) with another monitoring device **14,** which can be worn by the user. Furthermore, either of the monitoring devices **14** can trigger an alert, for example as a sound, vibration, or light signal, to inform the user about the incorrect handling of the medical device **12.** In a variation of this embodiment, the contact sensors **14** are replaced with near-field communication (NFC) sensors **14** to measure the proximity of the user's monitoring device **14** to the monitoring device **14** attached to the medical device **12.**

In another embodiment, as shown in Fig. 4, for a medical device **12** such as an X-ray detector plate, one monitoring device **14** is attached to a safety strap **15,** another monitoring device **14** is worn by the operator, and a third monitoring device **14** is attached to the medical device **12.** The safety strap **15** can be attached to the operator and connected to the medical device **12** with a mechanical connector (screw, carabiner, snap connector, etc). The algorithm processes the log information from all three monitoring devices **14** to verify that the strap **15** is worn and connected to the medical device **12,** otherwise it will log and raise an alert. Connectors **34** send a signal to at least one of the monitoring devices **14** when the strap **15** is successfully connected or disconnected. Similarly, the monitoring devices **14** can be configured to measure the proximity of each other and hence trigger a signal when the safety strap **15** is put on or taken off.

In a further embodiment, one monitoring device **14** (typically the one carried by the operator) connects with other monitoring devices **14** (typically attached to or part of the medical device **12)** to collect log information and uploads the data to a remote host (i.e., the server computer **16)** for further processing. On the server computer **16,** log information from multiple users from different clinical sites are collected and analyzed. The analysis comprises for example an evaluation of the average motion speed of each single user and statistical metrics (e.g., standard deviation, percentiles, etc.) over the group of all users connected to the server computer **16.** In this way, normal operating conditions can be derived for individual user parameters like the average user motion to identify any atypical condition (e.g., the user is running at a fast pace instead of walking near the average speed). Furthermore, by comparison with the statistical distribution derived from the peer group of users, recommendations can be derived for individual users to pay attention to (e.g., that the user is walking in general at a much faster pace than its peers). This information can be sent back to the monitoring device **14** and displayed as recommendation, warning or alert. Therefore, improved personalized training of medical staff can be planned and provided based on the analysis of the log information from the acquired data.

Other user parameters to be analyzed may comprise the heart rate, body temperature, blood pressure, grip force, vertical and horizontal acceleration, etc. Moreover, user parameters may also comprise device-specific settings that are commonly used by the operator such as for example the applied X-ray dose or the selected X-ray tube settings during a CT or X-ray examination.

In another embodiment, the processing of the data is computed at least partially on the monitoring device **14.** For example, the statistical data and limits for atypical conditions are stored on the monitoring device **14** and might be updated via the server computer **16,** when new data is available. The generation of alerts and the derivation of user recommendations are computed directly on the monitoring device **14.** In this way it is possible to trigger alerts instantaneously on detection of a threshold crossing of certain limits without requiring a connection to the server computer **16.**

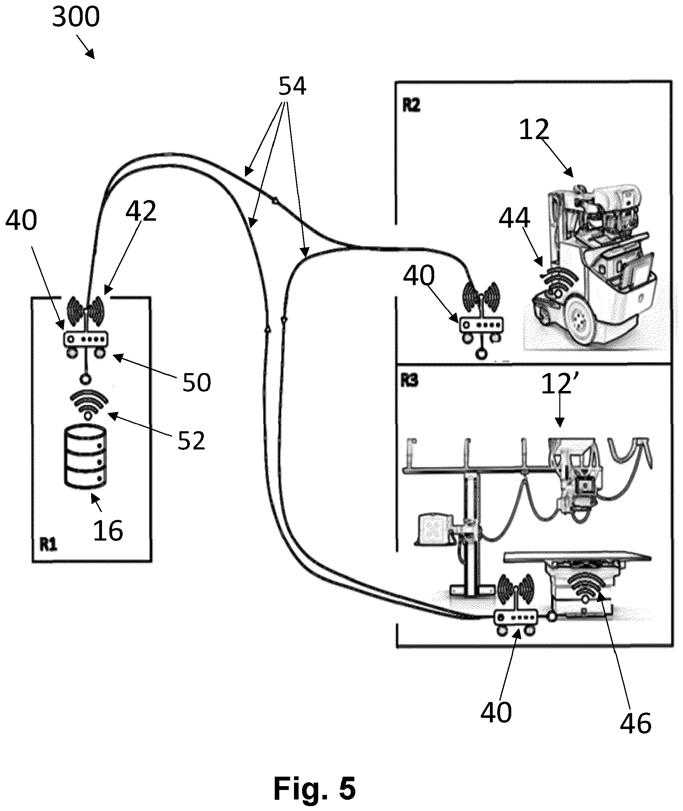

Another source of malfunction of mobile and/or cord-free medical equipment is loss of wireless connectivity when transported to a location with inadequate wireless (e.g., Wi-Fi or Bluetooth^{™} service coverage. Moreover, some devices that could benefit from wireless connectivity may not include this feature due to concerns about its reliability. For example, if the medical device transmits life-critical data such that loss of connectivity is particularly problematic, then the device manufacturer may elect to forego wireless connectivity entirely and employ only a wired data connection such as wired Ethernet. Fig. 5 shows an apparatus **300** which provides wireless connectivity with improved reliability. The illustrative apparatus **300** of Fig. 5 includes a robot **40** (in a first room **R1)** with a Wi-Fi radio **42** wirelessly connected to a first medical device **12** (in a second room **R2)** and a second medical device 12' (in a third room **R3).** The robot **40** suitably includes an electric motor or other propulsion system, and is designed to move autonomously. For example, the robot **40** suitably has optical, electro-magnetic and thermal sensors **50** to identify obstacles and to identify its position on a map of the location. For example, the sensors **50** may include proximity sensors such as LIDAR sensors, heat sensors, or the like to detect proximity to objects so as to avoid them. If the hospital has a real-time locating service (RTLS) then the sensors **50** may also include RF tags or other sensors enabling location tracking via the RTLS, which in conjunction with an electronic map of the hospital (typically included in an RTLS) can be used to facilitate navigation of the robot **40.** These are merely nonlimiting illustrative examples. The robot **40** may also include rubber bumpers or the like to limit damage in the event it does collide with a person or object, and may include a visible light (optionally flashing) and/or an audible beacon (e.g. a beeper) to alert medical personnel of the robot **40,** especially when it is in motion.

The robot **40** (or a server computer **16** in wireless connection with the robot via the Wi-Fi radio **42)** may also comprise a scheduler software, which can be configured to link with one or more specified mobile medical device(s) **12** to follow the mobile medical device **12** whenever it is moved to a new location, position itself relative to the mobile medical device **12** to maximize the Wi-Fi signal between the robot **40** and the Wi-Fi radio **44** connected to the medical device **12,** collect image data directly from via the Wi-Fi connection between radios s **42** and **44** after an acquisition has been performed, collect log information from the image sensor **14** with a pre-defined cadence, upload data files to the medical device **12** (e.g. a software or firmware update of software components, update of pretrained neural networks, and so forth), navigate and move towards the server computer **16** to upload the collected data or download new software updates for distribution to remote systems, and so forth. To enable the robot **40** to locate the medical device **12** (and follow it, if the medical device **12** is moved while the robot is wirelessly connected with it), various approaches can be used. For example, if an RTLS is available then both the robot **40** and the medical device **12** can include RF tags or the like to enable them to be tracked by the RTLS, and the robot **12** can then access the RTLS to keep track of the location of the medical device **12** to which it is assigned. (In some such embodiments, the robot **40** itself could act as a location node of the RTLS). Additionally or alternatively, the medical device **12** could include a non-RTLS tag (i.e., a locator tag that is not utilized by an RTLS) which the robot **40** can directly detect to enable the robot **40** to locate and follow the medical device **12.** As yet another tracking method, signal strength of the wireless communication between the Wi-Fi radios **42** and **44** of the robot **40** and medical device **12,** respectively, can be used.

The robot **40** in the above example thus acts as a mobile Wi-Fi access point (AP) to ensure Wi-Fi connectivity of the medical device **12** even if it moves to an area with poor or nonexistent Wi-Fi coverage. In general, the medical and/or operational data generated by the medical device **12** is transferred via the robot to a server computer **16,** and in various embodiments more particularly with a database hosted on the server computer **16,** such as the patient's electronic health record (EHR), a radiology database such as a Picture Archiving and Communication System (PACS), or so forth. The data transfer to the hospital network is via a suitable wireless network of the hospital, such as a hospital Wi-Fi network **52** (although a hospital wireless network **52** other than a Wi-Fi network is also contemplated). Note that while the hospital Wi-Fi network **52** is diagrammatically represented in Fig. 5 by a single illustrated Wi-Fi access point (AP) **52,** this is for illustrative convenience and more typically the hospital network **52** will include a number of Wi-Fi APs distributed over the floor(s) of the hospital to provide Wi-Fi coverage over most (but not necessarily all) areas of the hospital.

In the above example, the robot **40** suitably has a single radio **42,** e.g. a Wi-Fi radio, that both provides the wireless connectivity with the medical device **12** and the wireless connectivity with the hospital wireless network **52.** In another example, if the medical device **12** has wireless connectivity of a type or protocol other than Wi-Fi, the robot **40** can again serve as a bridge between the medical device **12** and the hospital Wi-Fi system. In other words, in these embodiments the Wi-Fi radio **44** of the medical device **12** is replaced by another type of radio, such as a Bluetooth^{™} radio, Zigbee^{™} radio, or the like. In these embodiments, the robot **40** includes the Wi-Fi radio **42** as described in order to communicate with the hospital Wi-Fi network **52,** and also includes a second radio (not shown) configured to communicate via the communication type or protocol of the medical device **12** (e.g., Bluetooth^{™}or Zigbee^{™}). In these embodiments the robot **40** thus acts as a mobile wireless bridge between the Bluetooth^{™}or Zigbee^{™} or other non-Wi-Fi protocol of the medical device **12** and the Wi-Fi hospital network **52.** An advantage of these embodiments is that the Bluetooth^{™}or Zigbee^{™} or other non-Wi-Fi protocol can be a short-range protocol (i.e. shorter range than Wi-Fi) and hence can operate at lower power and with less likelihood of radio frequency interference between medical devices.

It will also be appreciated that these embodiments could be implemented with the robot **40** being replaced by a stationary device with two radios (e.g. Wi-Fi for communicating with the hospital wireless network **52** and a Bluetooth^{™}or Zigbee^{™} radio for communicating with the medical device **12).** For example, such relay devices could be distributed strategically throughout the areas of the hospital where medical devices using the non-Wi-Fi protocol are to be used.

In any of these embodiments, the robot **40** provides improved reliability for wireless connectivity of the medical device **12.** Consequently, the need for temporarily storing medical and/or operational data in an on-board storage buffer (e.g., a flash memory for example) of the medical device **12** is reduced or eliminated.

Fig. 5 diagrammatically shows movement of the robot **40,** equipped with a first Wi-Fi radio **42,** by way of a diagrammatic trajectory **54.** For the illustrative example, the robot **40** starts its path at a position near the server computer **16** (as illustrated) or at some other central location or depot where the robot places itself when not in use providing wireless bridging for a wireless medical device. (In this regard, it should be noted that while illustrative Fig. 5 shows a single robot **40** diagrammatically shown at various locations along the trajectory **54,** more generally there may be a fleet of such robots to provide wireless bridging for multiple medical devices at the same time). In the illustrative trajectory **54,** the robot starts and moves from its depot location to locate (and, if needed, follow) the medical device **12** for data collection in the first room **R1.** The robot **40** can be configured to follow the first medical device **12** with the Wi-Fi radio **44** to the second room **R2** and to position itself to maximize the Wi-Fi signal and to collect data from the first medical device **12.** The robot **40** can also be configured to visit several medical devices **12** at different locations, for example the robot **40** may be reassigned to the second medical device **12'** after the first medical device **12** is finished being used, and in response to the reassignment the robot **40** is configured to move to the third room **R3** to connect with a Wi-Fi radio **46** of the second medical device **12'** to collect data from it.

The robot **40** may or may not maintain continuous Wi-Fi connection with the hospital Wi-Fi network **52** when providing wireless bridging for a medical device **12.** In general, it is advantageous for the robot **40** to maintain Wi-Fi connection with the hospital Wi-Fi network **52** when providing wireless bridging, as in this case medical and/or operational data generated by the medical device **12** can be immediately transferred to an appropriate database such as the patient's EHR, a radiology database such as a PACS, or so forth. In this way, there is no data transfer latency and also no risk of loss of buffered data (since the data are not buffered but instead immediately transferred). Maintaining continuous Wi-Fi connectivity can be achieved in numerous circumstances. For example, if the Wi-Fi radio **42** of the robot **40** has a larger range than the Wi-Fi radio **44** of the medical device **12** then it may be able to maintain connectivity even in areas where the medical device **12** loses such connectivity. In another approach, the robot **40** can strategically position itself at a position intermediate between the nearest hospital network AP **52** and the medical device **12,** so as to maintain Wi-Fi connectivity with both. In embodiments in which the wireless radio **44** of the medical device **12** is a non-Wi-Fi radio (e.g. a Bluetooth^{™}or Zigbee^{™} radio), the robot **40** may provide the wireless bridging provided in a location with strong hospital Wi-Fi coverage (which however is not directly usable by the medical device in such an embodiment since it has a non-Wi-Fi radio).

In some embodiments, however, the robot **40** may be expected to provide wireless connectivity for the medical device **12** at a location where the robot **40** itself cannot maintain Wi-Fi connectivity. In such cases, the robot **40** suitably includes a data buffer (for example, a flash memory), and the medical device **12** also includes a data buffer. The robot **40** uses its connectivity with the medical device **12** (either Wi-Fi or non-Wi-Fi depending on the embodiment) to collect and store medical and/or operational data from the medical device **12.** At certain time intervals the robot **40** breaks off its wireless connectivity with the medical device **12** and autonomously moves to a location where the robot **40** regains Wi-Fi connectivity with the hospital Wi-Fi network **52,** and transfers the medical and/or operational data stored in the robot's data buffer to the appropriate database via the hospital network **52.** The robot **40** then moves back into position proximate to the medical device **12** and reestablishes wireless connectivity with the medical device **12** to resume medical and/or operational data collection from the medical device **12.** During the time interval(s) during which the robot **40** breaks off wireless connectivity with the medical device **12,** the medical device **12** temporarily stores medical and/or operational data that it generates in its own data buffer. This approach reduces the amount of medical and/or operational data that is in a temporary buffer, thus reducing data latency, enabling use of a smaller data buffer in the medical device **12,** and reducing the extent of data loss if the data buffer of the medical device **12** loses stored data.

In the illustrative examples, the robot **40** comprises a terrestrial vehicle, for example including wheels or tracks or the like for autonomous movement over the floors of hospital corridors and rooms. In another embodiment the robot **40** comprises an unmanned aerial vehicle (UAV) such as an airborne drone, with navigational sensors **14** allowing to position and move in 3D space. Such embodiments may be useful, for example, in contexts such as a mobile emergency medical facility deployed at a disaster location.

In a further embodiment, the robot **40** is configured to automatically follow the medical device **12** and to re-position itself to extend and maximize the Wi-Fi connectivity between the medical device **12** and a local hospital IT network **52.** If the robot **40** detects the medical device **12** is moving too far from the Wi-Fi AP **30** and the robot **40** itself cannot keep up being connected to the local hospital IT network **52,** it will request another similar robot **40** to fill the gap. In this way, multiple robots **40** will be lined up to supply uninterrupted Wi-Fi connection to the medical device **12.**

In another embodiment of the robot **40,** the server computer **16** has an orchestrating mechanism capable of tracking the multiple robots **40** in the hospital. The orchestrating software in the server computer **16** can indicate to deploy additional number of robots **40** if the range of current robots **40** is already maximized and a specific hospital area has no coverage. The number of additional robots **40** to be deployed can then be decided based on the hospital area and the number of medical devices **12** present in the hospital.

In another embodiment, the medical device **12** is stationary, and the robot **40** is navigating to the stationary medical device **12** on a fixed schedule to collect data (image data, log information, and so forth). The robot **40** may be configured to collect data from multiple medical devices **12** per request on its way to the next waypoint, which could either be a stationary or mobile medical devices **12,** or the server computer **16,** where the data is downloaded for further data storage (e.g., Picture Archiving and Communication System (PACS) databases, maintenance databases, and so forth) and processing (e.g., image analysis, alert scoring, and so forth).

In another embodiment, the processing of data (e.g., computer-aided decision algorithm, image quality analysis, analysis of log-files, etc.) is already performed on the robot **40** and the generated results are sent together with the collected data to the server computer **16.** In this way, proprietary algorithms that rely on vendor-specific imaging system information can be applied to the data prior to sending them to the PACS.

In another embodiment, the robot **40** is moving on a railway system or similar safeguarded system, to facilitate the navigation on pre-defined courses, laid out by the tracks/safeguard system (electro-magnetic coils in the ground, etc.). In this way, the requirements on the collision detection sensors 14 can be relaxed. In another variant, the railway system could comprise an overhead transport (OHT), and the robot **40** then suitably comprises an OHT vehicle that runs on OHT. Such OHT systems are sometimes used in complex manufacturing sites such as semiconductor fabrication facilities, and accordingly vehicle transport coordination and collision avoidance techniques used in manufacturing OHT system can be readily applied. An advantage to an OHT is that the robot **40** is located above medical personnel, again substantially reducing or eliminating the likelihood of collision with medical personnel, equipment, or the like. Moreover, the robot **40** might be operated in a manual mode, i.e., it is moved and re-positioned by an operator. In yet another contemplated embodiment, a technician from the given institution pre-maps the course of interest for the robot **40** using an augmented reality (AR) capable device like a smartphone or tablet.

As the robot **40** may be out of range of the hospital Wi-Fi network **52,** it typically should be capable of operating autonomously to locate the medical device **12** or **12'** to which it is assigned, establish wireless communication with the assigned medical device, and (in some embodiments) concurrently transfer the medical and/or operational data received from the assigned medical device to the hospital Wi-Fi network **52,** and (in some embodiments) temporarily store the received medical and/or operational data in a data buffer (e.g. flash memory) of the robot **40** and occasionally break wireless connection with the medical device **12** and travel to a location with hospital Wi-Fi access to transfer the stored data to the network and return to the medical device to reestablish wireless communication therewith. Accordingly, the robot **40** suitably includes components not shown in Fig. 5, such as an on-board electronic processor (e.g. microprocessor or microcontroller) and on-board memory (e.g., flash memory, read-only memory, electronically erasable read-only memory, or so forth) that stores instructions readable and executable by the electronic processor to control the robot **40** (including controlling the at least one radio **42)** to perform such autonomous functions.

In a more general embodiment, an electronic processor is provided, along with a memory storing instructions readable and executable by the electronic processor to determine whether the radio **44** of the medical device **12** has wireless connectivity, and to perform a remedial action in response to the determination being that the radio **44** of the medical device **12** does not have wireless connectivity. In the previously described embodiments, the electronic processor and memory are on-board the robot **40,** and the remedial action entails controlling the robot **40** to autonomously move the robot toward the medical device **12** and establish a wireless connection with the radio **44** of the medical device via the at least one radio **42** of the autonomous robot **40;** acquire medical and/or operational data generated by the medical device via the established wireless connection; and transfer the acquired medical and/or operational data to the hospital wireless network **52** via the at least one radio of the autonomous robot.

In another embodiment, the electronic processor and memory are integrated into the medical device **12** itself, and the instructions program the electronic processor of the medical device **12** to use the Wi-Fi or other wireless radio **44** of the medical device **12** to detect the Wi-Fi (or other wireless) signal strength as the medical device 12 is moved to a new location. Based on this tracking, it is determined whether the medical device **12** has wireless connectivity (where not having wireless connectivity corresponds to having no wireless connection at all, or having a weak wireless connection that is insufficient to reliably transfer the acquired medical and/or operational data to the hospital wireless network **52).** In response to determining the radio **44** does not have wireless connectivity, the remedial action may suitably be to recommend the medical device **12** be moved to a location with stronger signal strength. The medical device **12** can indicate, for example on a display of the medical device (or, in another embodiment, on a display of a cellphone or other mobile device carried by a hospital worker transporting the medical device **12)** where the medical device **12** should be moved to ensure wireless connectivity. The hospital worker can then move the medical device **12** to that location. In another variant, the medical device **12** can relay a notice to an individual (e.g. hospital worker) who is responsible for the relocation of the device. Such notice can indicate that an updated positioning of the device is needed, or the notice can also relay information on a recommended updated position of the medical device that would establish (or improve) the Wi-Fi signal connection.

In a variant embodiment, if a map of Wi-Fi access points APs is available along with an RTLS that tracks the medical device **12** (e.g., via an RTLS tag on the medical device **12)** (or another location tracking system such as global positioning system, i.e. GPS), then the determination that the radio **44** of the medical device **12** does not have wireless connectivity can be based on whether the RTLS-tracked location of the medical device **12** is within operational range of at least one Wi-Fi AP as indicated by the Wi-Fi APs map. If it is determined that the medical device **12** does not have wireless connectivity, then the notice can recommend moving the medical device **12** to a nearest location in operational range of at least one AP.

The apparatus **10** can be applied to mobile medical devices **12** with wirelessly connected sensors **14** such as Wi-Fi ultrasound probes, Wi-Fi X-ray detectors, and so forth with the purpose to optimize connectivity and operability of the mobile medical devices **12.**

Moreover, the apparatus **10** can be applied to any mobile medical device **12** that collects data to ensure on-time data transmission to the local PACS.

Finally, the apparatus **10** can be generally used on both mobile and stationary medical devices **12** to regularly collect data from the medical devices **12** without relying on the medical devices **12** being connected to a local hospital network **52.**

The disclosure has been described with reference to the preferred embodiments. Modifications and alterations may occur to others upon reading and understanding the preceding detailed description. It is intended that the exemplary embodiments be construed as including all such modifications and alterations insofar as they come within the scope of the appended claims or the equivalents thereof.

## Claims

1. A system **(300)** for assessing and/or providing wireless communication between a medical device **(12, 12')** and a hospital wireless network **(52),** the system comprising:
- an electronic processor; and
- a memory storing instructions readable and executable by the electronic processor to:
determine whether a radio **(44)** of the medical device has wireless connectivity; and
perform a remedial action in response to the determination being that the radio of the medical device does not have wireless connectivity.

2. The system **(300)** of claim 1, further comprising:
at least one autonomous robot **(40)** including at least one radio **(42)** and the electronic processor and the memory storing the instructions readable and executable by the electronic processor, wherein the remedial action includes:
autonomously moving the robot toward the medical device and establishing a wireless connection with the radio **(44)** of the medical device via the at least one radio of the autonomous robot; acquiring medical and/or operational data generated by the medical device via the established wireless connection; and
transferring the acquired medical and/or operational data to the hospital wireless network **(52)** via the at least one radio of the autonomous robot.

3. The system of claim 2, wherein the at least one radio **(42)** of the robot includes a non-Wi-Fi radio configured to establish the wireless connection with the radio **(44)** of the medical device **(12)** and a Wi-Fi radio configured to transfer the acquired medical and/or operational data to the hospital wireless network **(52).**

4. The system of claim 2, wherein the at least one radio **(42)** includes a single radio configured to both establish the wireless connection with the radio **(44)** of the medical device **(12)** and to transfer the acquired medical and/or operational data to the hospital wireless network **(52).**

5. The system of any one of claims 2-4, wherein the on-board memory stores instructions readable and executable by the electronic processor to control the robot **(40)** to acquire the medical and/or operational data generated by the medical device **(12)** via the established wireless connection and concurrently transfer the acquired medical and/or operational data to the hospital wireless network **(52).**

6. The system of any one of claims 2-5, wherein the on-board memory stores instructions readable and executable by the electronic processor to control the robot **(40)** to perform at least one iteration of:
(i) acquiring medical and/or operational data generated by the medical device via the established wireless connection while the robot is not connected with the hospital wireless network **(52);** and
breaking off the wireless connection with a radio **(44)** of the medical device and then moving away from the medical device and transferring the acquired medical and/or operational data to the hospital wireless network **(52)** while the robot is not connected with the radio of the medical device.

7. The system **(300)** of claim 1, wherein the medical device **12** includes the electronic processor and the memory, and the remedial action includes outputting at least one of (i) an indication that the medical device **12** does not have wireless connectivity and/or (ii) a recommendation of a location to which the medical device can be moved to provide wireless connectivity.

8. The system **(300)** of claim 7, wherein the determination of whether the radio **(44)** of the medical device **(12)** has wireless connectivity is based on measurement of a wireless signal strength received by the radio of the medical device determined using the radio of the medical device.

9. The system **(300)** of one of claim 7, wherein the determination of whether the radio **(44)** of the medical device **(12)** has wireless connectivity includes:
determining a current location of the medical device **(12)** using a location tracking system; and
comparing the current location with a map of Wi-Fi access points to determine whether the radio of the medical device has wireless connectivity to at least one Wi-Fi access point.

10. A medical apparatus **(10),** comprising:
a medical device **(12);**
one or more sensors **(14)** configured to monitor transport of the medical device; and
at least one electronic processor **(16, 18)** programmed to:
detect a time-stamped transport event based on sensor data acquired by the one or more sensors; and
perform a remedial action in response to the detected time-stamped transport event.

11. The medical apparatus **(10)** of claim 10 wherein the one or more sensors **(14)** include an inertial measurement unit (IMU) disposed on or in the medical device **(12);** and the at least one electronic processor **(16, 18)** is programmed to:
detect the time-stamped transport event comprising a time-stamped impact event in which the portable medical device undergoes an impact and the remedial action performed in response to the detected time-stamped impact event includes at least recording the time-stamped impact event.

12. The medical apparatus **(10)** of any one of claims 10-11, wherein the medical device **(12)** is portable, and the one or more sensors **(14)** include:
a location sensor disposed on or in the portable medical device **(12);** and
a handle usage sensor disposed on or in a transportation handle **(13)** of the medical device and configured to detect usage of the transportation handle;
wherein the at least one electronic processor **(16, 18)** is programmed to:
detect the time-stamped transport event comprising a time-stamped handle non-usage event in which the handle usage sensor is not detecting usage of the transportation handle concurrently with the location sensor detecting transportation of the portable measurement device.

13. The medical apparatus **(10)** of any one of claims 10-11, wherein the medical device **(12)** is portable, and the one or more sensors **(14)** include:
a proximity sensor including a first sensor component disposed on or in the portable medical device and a second sensor component disposed on a device support component **(15)** configured to detachably connect with and support the portable medical device, wherein the first and second sensor components are configured to detect whether the first and second sensor components are in mutual proximity; and
a location sensor disposed on or in the portable medical device;
wherein the at least one electronic processor **(16,18)** is programmed to:
detect the time-stamped transport event comprising a time-stamped support device non-usage event in which the proximity sensor is not detecting mutual proximity of the first and second sensor components concurrently with the location sensor detecting transportation of the portable measurement device.

14. The medical apparatus **(10)** of any one of claims 10-11, wherein the one or more sensors **(14)** include:
a connection sensor configured to detect whether a detachable device support component **(15)** is connected with the portable medical device **(12);** and
a location sensor disposed on or in the portable medical device;
wherein the at least one electronic processor **(16, 18)** is programmed to:
detect the time-stamped transport event comprising a time-stamped support device non-usage event in which the connection sensor is not detecting the detachable device support component is connected with the portable medical device concurrently with the location sensor detecting transportation of the portable medical device.

15. The medical apparatus **(10)** of any one of claims 10-13, wherein the medical device **(12)** is portable, and the one or more sensors **(14)** include:
a location sensor disposed on or in the portable medical device **(12);**
wherein the at least one electronic processor **(16, 18)** is programmed to:
detect the time-stamped transport event comprising a time-stamped transport speeding event in which the location sensor is detecting transportation of the portable measurement device at a speed greater than a speed limit.
